# FASCICULE DE BREVET EUROPEEN

(11) **EP 0 480 846 B1**
(45) Date de publication et mention de la délivrance du brevet: **31.07.1996**
(21) Numéro de dépôt: 91420332.8
(22) Date de dépôt: 18.09.1991
(51) Int. Cl.: H02J 9/06

(54) **Installation d'alimentation en énergie électrique alternative comportant une alimentation de secours équipée d'un onduleur fontionnant en mode réversible**
Wechselstromenergieversorgungsanlage mit Notstromversorgung ausgestattet mit einem mit umkehrbarer Betriebsart arbeitendem Wechselrichter
AC electric power system with emergency supply equipped with an inverter functioning in reversible mode

(30) Priorité: 08.10.1990 FR 9012475
(43) Date de publication de la demande: 15.04.1992
(73) Titulaire: SCHNEIDER ELECTRIC SA, F-92100 Boulogne-Billancourt (FR)
(72) Inventeur: Fiorina, Jean-Noel, F-38050 Grenoble Cedex (FR); Tenaud, Patrick, F-38050 Grenoble Cedex (FR)
(74) Mandataire: Hecké, Gérard

(56) Documents cités:
- EP-A- 0 019 932
- EP-A- 0 200 656
- WO-A-80/01443
- FR-A- 2 577 728
- GB-A- 2 137 033

## Description

La présente invention se rapporte à une installation d'alimentation en énergie électrique alternative, comportant une alimentation de secours équipée d'un onduleur fonctionnant en mode réversible.

Il est connu d'équiper l'installation d'alimentation d'une charge avec une alimentation de secours apte à remplacer provisoirement l'alimentation principale, qu'elle soit mono ou poly-phasée, en cas de défaillance de celle-ci. Cette alimentation de secours utilise l'énergie fournie par une batterie d'accumulateurs. Cette batterie alimente un onduleur réversible qui fonctionne, dans un sens comme dans l'autre, en générateur de tension. En cas de défaillance du réseau d'alimentation, la charge en est automatiquement déconnectée par un contacteur statique prévu à cet effet, et c'est alors l'alimentation de secours qui fournit, à travers son onduleur, l'énergie électrique alternative à cette charge. L'onduleur étant excité en mode réversible, c'est à travers lui que la batterie est rechargée par le réseau lorsque, tout étant redevenu normal, il alimente à nouveau la charge. Le document FR-A-2 577 728 divulgue une installation de ce type.

Dans des installations de ce type, on prévoit généralement, afin d'obtenir, lorsque les batteries se rechargent à travers l'onduleur réversible, un courant et une tension d'onduleur en phase, une inductance de déphasage branchée entre le contacteur statique précité et la charge (US 4.673.825 ≙ FR-A- 2 577 728, US 4.238.691). Cette solution a pour inconvénients, d'une part d'augmenter le prix de revient de l'installation, et d'autre part d'entraîner le passage d'un courant relativement important dans l'onduleur lorsque, étant en état de veille, son seul rôle est de servir de circuit de recharge de la batterie.

L'invention vise à remédier à ces inconvénients. Elle se rapporte à cet effet à une installation pour l'alimentation d'une charge en énergie électrique alternative à partir du réseau, cette installation comportant une alimentation auxiliaire de secours équipée d'une batterie d'accumulateurs rechargeables et d'un onduleur réversible, avec des moyens pour recharger cette batterie, par le réseau et à travers cet onduleur réversible, lorsque ce réseau alimente normalement la charge, et cette installation se caractérisant en ce qu'elle est équipée de moyens pour, lorsque le réseau fonctionne normalement et alimente la charge, faire prélever par l'onduleur sur ce réseau un courant actif dont l'amplitude est proportionnelle au courant continu alors nécessaire à la recharge de cette batterie, de sorte que l'onduleur fonctionne en générateur de courant lorsqu'étant en cet état de veille, il est utilisé pour effectuer cette recharge.

Avantageusement en outre, cette installation peut être équipée de moyens de compensation d'harmoniques destinés, lorsque l'onduleur est à l'état de veille, à annuler les harmoniques du courant fourni à la charge par le réseau, l'onduleur fournissant à la charge les harmoniques qu'elle absorbe.

Avantageusement encore, cette même installation peut aussi être équipée de moyens de compensation de partie réactive destinés, lorsque l'onduleur est à l'état de veille, à annuler la partie réactive du courant fourni à la charge par le réseau, l'onduleur fournissant à la charge la partie réactive du courant qu'elle absorbe.

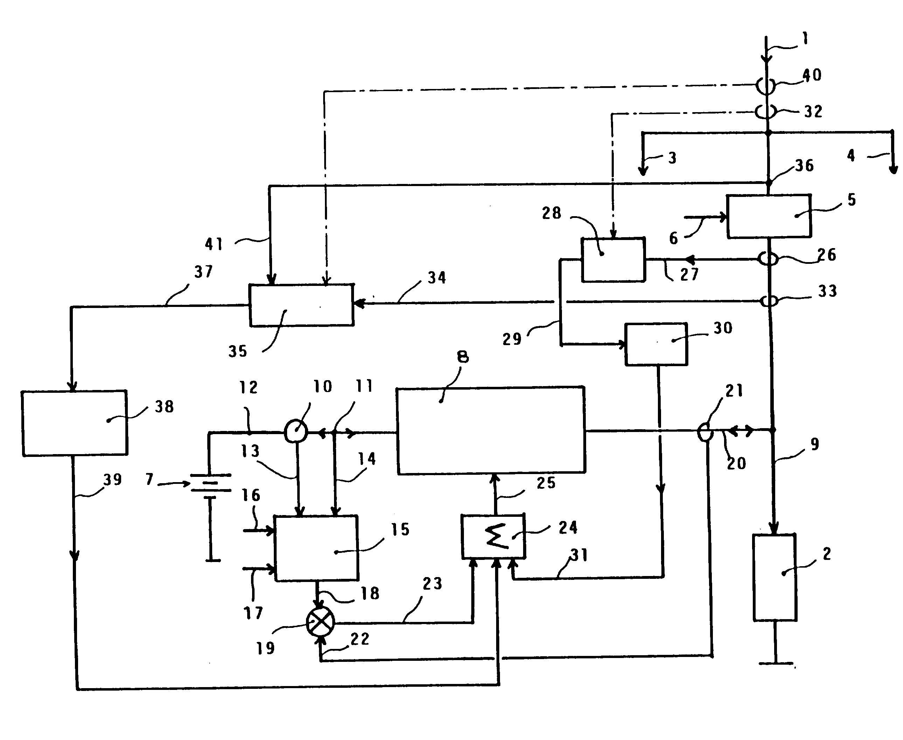

De toute façon, l'invention sera bien comprise,et ses avantages et autres caractéristiques ressortiront, lors de la description suivante d'un exemple non limitatif de réalisation, en référence au dessin schématique annexé dont la figure unique représente, en courant monophasé dans cet exemple, un schéma synoptique de cette installation.

En se reportant à cette figure unique, la référence 1 désigne l'arrivée du réseau alternatif, supposé ici monophasé essentiellement pour simplifier le dessin, qui alimente en énergie électrique une charge 2, ainsi que d'autres utilisations en 3 et 4.

Entre le secteur monophasé 1 et cette charge 2 est disposé un contacteur statique 5 qui est commandé en 6 par des signaux provenant d'un organe central de mesure, de calcul et de commande (non représenté), afin de déconnecter la charge 2 du réseau 1 en cas de défaillance de ce dernier. Dans ce dernier cas, le contacteur statique 5 est maintenu ouvert par le signal en 6, et la charge 2 est alors provisoirement alimentée par une alimentation de secours comprenant une batterie d'accumulateurs 7 et un onduleur réversible 8.

Lorsque le réseau 1 fonctionne normalement, le contacteur statique 5 est maintenu fermé, et le réseau 1 non seulement alimente la charge 2 par la ligne 9, mais encore recharge, par l'intermédiaire de l'onduleur réversible 8 dont la stratégie de découpage est adaptée en conséquence, la batterie d'accumulateurs 7.

Conformément à un premier aspect de l'invention, on fait fonctionner cet onduleur 8, qui en cas de défaillance du secteur 1 fonctionne en générateur de tension alimentant la charge 2, en générateur de courant lorsque, le réseau (1) étant normalement présent et alimentant la charge, il est utilisé pour recharger la batterie 7. Ce résultat est obtenu en faisant prélever par l'onduleur 8, sur la ligne 9, connectant le réseau à la charge, c'est à dire en fait sur le réseau 1, un courant actif dont l'amplitude est proportionnelle au courant continu alors nécessaire à la recharge de cette batterie 7.

Dans ce but, un capteur de courant continu 10 et un point de mesure de tension continue 11 sont prévus sur le fil d'entrée/sortie 12 de la batterie 7, et ces données de courant et tension de charge sont appliquées repectivement en 13 et 14 à un régulateur électronique 15, qui reçoit par ailleurs en 16 et 17 les références de courant et de tension de charge de la batterie qui sont élaborées par l'organe central de commande précité.

Ce régulateur 15 fournit en conséquence, sur une première entrée 18 d'un comparateur 19, une consigne de courant alternatif d'entrée de l'onduleur 8, qui est comparée avec un courant d'entrée réel, prélevé sur le conducteur d'entrée/sortie 20 de l'onduleur par un transformateur d'intensité 21 et appliqué à la seconde entrée 22 de ce comparateur 19.

La sortie 23 de ce comparateur 19 est appliquée, via un sommateur 24 dont le rôle apparaîtra ci-après, sur une entrée de commande 25 de l'onduleur 8, afin de modifier en conséquence sa stratégie de découpage.

Selon un autre aspect de l'invention, cette même stratégie de découpage est en outre modifiée pour que l'onduleur injecte, par le conducteur 20, sur la ligne 9, un courant tel que le réseau n'ait à fournir que le fondamental du courant alternatif absorbé par la charge, l'onduleur fournissant les harmoniques de courant absorbés par la charge.

Dans ce but, le courant du réseau est prélevé en 26, en aval du contacteur statique 5, par un transformateur d'intensité, et est appliqué en 27 à un filtre passe-haut 28 apte à rejeter le fondamental de ce courant et à laisser passer tous ses harmoniques. La sortie 29 de ce filtre est appliquée à un régulateur électronique 30 dont la fonction de transfert est déterminée pour appliquer, via sa sortie 31, le sommateur 24, et l'entrée 25 précitée, à l'onduleur 8 des signaux de modification de sa stratégie de découpage tendant à annuler les harmoniques du courant du réseau prélevé en 26. L'onduleur fournit à la charge 2, par le conducteur 20 et la ligne 9, les harmoniques qu'elle absorbe, le réseau 1 ne fournissant plus que le fondamental du courant. Ainsi la commande de l'onduleur est inclue dans une boucle d'asservissement destinée à annuler les harmoniques du courant dans le réseau (1).

En variante, le capteur de courant peut être placé en 32, en amont du contacteur statique 5, et le dispositif fonctionne alors en dépollution du réseau 1, car il élimine alors aussi les harmoniques de courant du réseau qui sont dûs à d'autres utilisations.

Selon encore un autre aspect de l'invention, cette stratégie de découpage est aussi modifiée pour que l'onduleur 8 injecte, par le conducteur 20, sur la ligne 9, un courant tel que le réseau 1 n'ait à fournir que la partie active du courant absorbé par la charge, l'onduleur fournissant la partie réactive du courant absorbé par la charge. Le réseau voit alors la charge 2 à "cos.ϕ = 1".

Dans ce but, le courant du réseau est prélevé en aval du contacteur statique 5 par un transformateur d'intensité 33, et est appliqué en 34 à un dispositif 35 d'extraction de la partie déphasée courant/tension (c'est à dire de la partie réactive du courant), qui reçoit sur son autre entrée 41 une donnée représentative de la tension correspondante, prélevée en 36 sur la ligne 1. La sortie 37 de ce dispositif d'extraction est appliquée à un régulateur électronique 38 dont la fonction de transfert est déterminée pour appliquer, via sa sortie 39, le sommateur 24, et toujours l'entrée 25, à l'onduleur 8 des signaux de modification de sa stratégie de découpage tendant à annuler la partie réactive du courant du réseau prélevé en 33. L'onduleur fournit à la charge 2, par le conducteur 20 et la ligne 9, la partie réactive du courant qu'elle absorbe. Ainsi, la commande de l'onduleur est inclue dans une boucle d'asservissement destinée à annuler la partie réactive du courant dans le réseau (1).

En variante, ce dernier capteur de courant peut être placé en 40, en amont du contacteur statique 5, de sorte que l'onduleur 8 fonctionne également en compensateur de cosϕ. car il compense aussi la partie réactive du courant du à d'autres utilisations.

Comme il va de soi, l'invention n'est pas limitée à l'exemple de réalisation qui vient d'être décrit, et s'applique par exemple tout aussi bien à une alimentation polyphasée.

## Revendications

1. Installation pour l'alimentation d'une charge (2) en énergie électrique alternative à partir d'un réseau (1), cette installation comportant une alimentation auxiliaire de secours équipée d'une batterie (7) d'accumulateurs rechargeables et d'un onduleur réversible (8), avec des moyens pour recharger cette batterie (7), par le réseau (1,9) et à travers cet onduleur réversible (8), lorsque ce réseau alimente normalement la charge (2), caractérisée en ce qu'elle est équipée de moyens (10,11,13 à 19, 21 à 25) pour, lorsque le réseau fonctionne normalement en alimentant la charge, faire prélever par l'onduleur (8) sur ce réseau un courant actif dont l'amplitude est proportionnelle au courant continu alors nécessaire à la charge de cette batterie (7), de sorte que l'onduleur fonctionne en générateur de courant lorsqu'étant en cet état de veille, il est utilisé pour recharger la batterie.

2. Installation selon la revendication 1, caractérisée en ce que lesdits moyens comportent des moyens (10) de mesure de courant continu fourni par l'onduleur (8) à la batterie (7), des moyens (11) de mesure de la tension continue aux bornes de la batterie, un premier régulateur électronique (15) comportant des entrées (13,14) connectées respectivement aux moyens (10,11) de mesure de courant continu et de la tension continue de la batterie, et des entrées (16,17) sur lesquelles sont appliquées des valeurs de références de courant et de tension de charge de la batterie, la sortie du premier régulateur (15) étant appliquée à une première entrée (18) d'un comparateur (19) dont une seconde entrée (22) est connectée à des moyens (21) de mesure du courant fourni par le réseau à l'onduleur (8), la sortie (23) du comparateur (19) étant connectée à une entrée (25) de commande de l'onduleur (8).

3. Installation selon l'une des revendications 1 et 2, caractérisée en ce qu'elle est en outre équipée de moyens de compensation d'harmoniques (28 à 31, 24,25) destinés, lorsque l'onduleur est à l'état de veille, à annuler les harmoniques du courant fourni à la charge par le réseau (1), l'onduleur (8) fournissant à la charge les harmoniques qu'elle absorbe.

4. Installation selon la revendication 3, caractérisée en ce que les moyens de compensation d'harmoniques comportent un filtre passe-haut (28) dont l'entrée est connectée à des moyens (26,32) de mesure du courant fourni à la charge (2) par le réseau (1), un second régulateur électronique (30) dont l'entrée est connectée à la sortie du filtre passe-haut et dont la sortie est connectée à une entrée (25) de commande de l'onduleur (8).

5. Installation selon la revendication 4, caractérisée en ce que les moyens de mesure du courant fourni à la charge comportement un capteur (32) qui est placé suffisamment en amont sur le réseau (1) pour que l'onduleur (8) élimine également les harmoniques du courant du réseau (1) qui sont dûs à d'autres utilisations.

6. Installation selon l'une quelconque des revendications 1 à 5, caractérisée en ce qu'elle est en outre équipée de moyens de compensation de partie réactive (33 à 39,24,25) destinés, lorsque l'onduleur est à l'état de veille, à annuler la partie réactive du courant fourni à la charge par le réseau (1), l'onduleur (8) fournissant à la charge la partie réactive du courant qu'elle absorbe.

7. Installation selon la revendication 6, caractérisée en ce que les moyens de compensation de partie réactive comportent un dispositif (35) d'extraction de la partie réactive connecté à des seconds moyens (33,40) de mesure du courant fourni par le réseau (1) à la charge (2), et des moyens (36) de mesure de la tension du réseau (1), la sortie du dispositif (35) d'extraction étant connectée à un troisième régulateur électronique (38) dont la sortie est connectée à une entrée de commande (25) de l'onduleur (8).

8. Installation selon la revendication 7, caractérisée en ce que les seconds moyens de mesure du courant comportent un capteur (40) qui est placé suffisamment en amont sur le réseau (1) pour que l'onduleur (8) fonctionne en compensateur de cos ϕ.

## Patentansprüche

1. Einspeisung zur Wechselspannungsversorgung einer Last (2) aus einem Netz (1), die eine Ersatzstromversorgung mit wiederaufladbaren Akkumulatorbatterien (7) und einem reversiblen Wechselrichter (8) sowie Mittel umfaßt, die zur Wiederaufladung dieser Batterien (7) aus dem Netz (1, 9) und über diesen reversiblen Wechselrichter (8) dienen, wenn die Last (2) im Normalbetrieb über dieses Netz eingespeist wird, dadurch gekennzeichnet, daß sie Mittel (10, 11, 13 bis 19, 21 bis 25) aufweist, um bei normaler Lastversorgung über das Netz durch den Wechselrichter (8) einen Wirkstrom aus diesem Netz zu entnehmen, dessen Amplitude dem jeweils zur Wiederaufladung der genannten Batterien (7) erforderlichen Gleichstrom proportional ist, so daß der Wechselrichter als Stromquelle arbeitet, wenn er in diesem Standby-Betrieb dazu verwendet wird, die Batterien wieder aufzuladen.

2. Einspeisung nach Anspruch 1, dadurch gekennzeichnet daß die genannten Mittel Meßmittel (10) zur Erfassung des vom Wechselrichter (8) an die Batterien (7) gelieferten Gleichstroms, Meßmittel (11) zur Erfassung der Gleichspannung an den Batterieklemmen, einen ersten elektronischen Regler (15) mit an die Meßmittel (10, 11) zur Erfassung des Batteriegleichstroms bzw. der Batteriegleichspannung angeschlossenen Eingängen (13, 14) sowie mit Referenzsignalen für den Ladestrom und die Ladespannung der Batterie beaufschlagten Eingängen (16, 17) umfassen, wobei das Ausgangssignal des ersten elektronischen Reglers (15) einem ersten Eingang (18) eines Komparatorglieds (19) zugeführt wird, dessen zweiter Eingang (22) an Meßmittel (21) zur Erfassung des vom Netz an den Wechselrichter (8) gelieferten Stroms angeschlossen ist, und der Ausgang (23) des Komparatorglieds (19) mit einem Steuereingang (25) des Wechselrichters (8) verbunden ist.

3. Einspeisung nach einem der Ansprüche 1 und 2, dadurch gekennzeichnet, daß sie zusätzlich Mittel (28 bis 31, 24, 25) zur Kompensation von Oberschwingungen umfaßt, die dazu dienen, im Standby-Betrieb des Wechselrichters die Oberschwingungen des der Last vom Netz (1) zugeführten Stroms zu unterdrücken, wobei der Wechselrichter (8) die Last mit den von ihr aufgenommenen Oberschwingungen versorgt.

4. Einspeisung nach Anspruch 3, dadurch gekennzeichnet, daß die Mittel zur Kompensation von Oberschwingungen ein Hochpaßfilter (28), dessen Eingang an Meßmittel (26, 32) zur Erfassung des der Last (2) vom Netz (1) zugeführten Stroms angeschlossen ist, sowie einen zweiten elektronischen Regler (30) umfassen, dessen Eingang an den Ausgang des Hochpaßfilters und dessen Ausgang an einen Steuereingang (25) des Wechselrichters (8) angeschlossen ist.

5. Einspeisung nach Anspruch 4, dadurch gekennzeichnet, daß die Meßmittel zur Erfassung des der Last zugeführten Stroms einen Stromwandler (32) umfassen, der so weit auf der Einspeiseseite von Netz 1 angeordnet ist, daß der Wechselrichter (8) auch die durch andere Verbraucher verursachten Stromoberschwingungen des Netzes (1) unterdrückt.

6. Einspeisung nach irgendeinem der Ansprüche 1 bis 5, dadurch gekennzeichnet, daß sie zusätzlich Mittel (33 bis 39, 24, 25) zur Blindanteilkompensation umfaßt, die dazu dienen, im Standby-Betrieb des Wechselrichters den Blindanteil des der Last vom Netz (1) zugeführten Stroms zu unterdrücken, wobei der Wechselrichter (8) die Last mit dem von ihr aufgenommenen Blindanteil des Stroms versorgt.

7. Einspeisung nach Anspruch 6, dadurch gekennzeichnet, daß die Mittel zur Blindanteilkompensation eine Schaltung (35) zur Erfassung des Blindanteils umfassen, die an zweite Meßmittel (33, 40) zur Erfassung des der Last (2) von Netz (1) zugeführten Stroms sowie an Meßmittel (36) zur Erfassung der Spannung in Netz (1) angeschlossen ist, wobei der Ausgang der Erfassungsschaltung (35) mit einem dritten elektronischen Regler (38) verbunden ist, dessen Ausgang an einen Steuereingang (25) des Wechselrichters (8) angeschlossen ist.

8. Einspeisung nach Anspruch 7, dadurch gekennzeichnet, daß die zweiten Meßmittel zur Erfassung des Stroms einen Stromwandler (40) umfassen, der so weit auf der Einspeiseseite von Netz (1) angeordnet ist, daß der Wechselrichter (8) als cos-ϕ-Regler wirkt.

## Claims

1. An installation to supply AC electrical power to a load (2) from a mains power system (1), this installation comprising an auxiliary back-up power supply equipped with a bank of rechargeable batteries (7) and a reversible inverter (8), with means for recharging this battery (7), by the mains power system (1, 9) and via this reversible inverter (8), when this mains power system supplies the load (2) normally, characterized in that it is equipped with means (10, 11, 13 to 19, 21 to 25) for the inverter (8) to take from this mains power system, when the mains power system is operating normally and is supplying the load, an active current whose amplitude is proportional to the direct current then necessary to charge this battery (7), so that the inverter operates as a current generator when, being on stand-by, it is used to recharge the battery.

2. The installation according to claim 1, characterized in that said means comprise means (10) for measuring the direct current supplied by the inverter (8) to the battery (7), means (11) for measuring the DC voltage at the battery terminals, a first electronic regulator (15) comprising inputs (13, 14) connected respectively to the means (10, 11) for measuring the DC current and DC voltage of the battery, and inputs (16, 17) to which battery charging current and voltage reference values are applied, the output of the first regulator (15) being applied to a first input (18) of a comparator (19) a second input (22) of which is connected to means (21) for measuring the current supplied to the inverter (8) by the mains system, the output (23) of the comparator (19) being connected to a control input (25) of the inverter (8).

3. The installation according to one of claims 1 and 2, characterized in that it is in addition equipped with means for compensating harmonics (28 to 31, 24, 25) designed, when the inverter is on stand-by, to cancel out the harmonics of the current supplied to the load by the mains system (1), the inverter (8) supplying the load with the harmonics which it absorbs.

4. The installation according to claim 3, characterized in that the means for compensating harmonics comprise a high-pass filter (28) whose input is connected to means (26, 32) for measuring the current supplied to the load (2) by the mains system (1), and a second electronic regulator (30) whose input is connected to the output of the high-pass filter and whose output is connected to a control input (25) of the inverter (8).

5. The installation according to claim 4, characterized in that the means for measuring the current supplied to the load comprise a sensor (32) which is placed sufficiently upline on the mains system (1) for the inverter (8) to also eliminate the current harmonics of the mains system (1) which are due to other users.

6. The installation according to any one of claims 1 to 5, characterized in that it is in addition equipped with means for compensating the reactive part (33 to 39, 24, 25) designed, when the inverter is on stand-by, to cancel out the reactive part of the current supplied to the load by the mains system (1), the inverter (8) supplying the load with the reactive part of the current which it absorbs.

7. The installation according to claim 6, characterized in that the means for compensating the reactive part comprise a device (35) for extracting the reactive part connected to second means (33, 40) for measuring the current supplied to the load (2) by the mains system (1), and means (36) for measuring the voltage of the mains power supply (1), the output of the extraction device (35) being connected to a third electronic regulator (38) whose output is connected to a control input (25) of the inverter (8).

8. The installation according to claim 7, characterized in that the second means for measuring the current comprise a sensor (40) which is placed sufficiently upline on the mains system (1) for the inverter (8) to operate as a cos **ϕ** compensator.
